Europäisches Patentamt

European Patent Office

Office européen des brevets

(11) Publication number: **0 198 563**
**B1**

# EUROPEAN PATENT SPECIFICATION

(45) Date of publication of patent specification: **18.10.89**

(21) Application number: **86200635.0**

(22) Date of filing: **15.04.86**

(51) Int. Cl.⁴: **A 01 B 59/048,** A 01 B 49/02,
A 01 B 49/06, A 01 B 51/02,
A 01 C 15/00

(54) An agricultural machine.

(30) Priority: **16.04.85 NL 8501109**

(43) Date of publication of application:
**22.10.86 Bulletin 86/43**

(45) Publication of the grant of the patent:
**18.10.89 Bulletin 89/42**

(84) Designated Contracting States:
**DE FR GB NL**

(56) References cited:
**DE-A-2 058 538**
**DE-A-3 130 167**
**FR-A-1 257 784**
**FR-A-1 554 609**
**FR-A-2 229 339**
**FR-A-2 384 433**
**US-A-4 287 955**

(73) Proprietor: **C. van der Lely N.V.**
**Weverskade 10 P.O. Box 26**
**NL-3155 ZG Maasland (NL)**

(72) Inventor: **Van der Lely, Cornelis**
**7, Brüschenrain**
**CH-Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

The invention relates to an agricultural machine, including a tilling implement disposed in front of a seed drill and comprising a frame having at least one coupling point for coupling to a tractor, which coupling point is located at the rear of the frame, the arrangement being such that the machine can be pushed by the tractor and is adjustable from the tractor to an operating position in front of the tractor and also to an operating position aside the tractor.

An agricultural machine of the kind set forth is known from the German patent application 23 24 677. With this known construction, the coupling of the combination includes only one arm, which does not constitute a very reliable connection in particular when the combination also includes a power driven soil working implement. The invention now seeks to arrive at a construction of the above kind, whereby a combination including a power driven tilling implement and a seeder can be arranged in front of a tractor by means of a coupling that is reliable, in particular with respect to the drive for the tilling implement. In accordance with the invention, a machine of the kind set forth includes a rotary harrow and the said frame comprises a parallelogram construction having parallel or substantially parallel beams arranged between a tractor linkable frame portion and the rotary harrow, the parallelogram construction comprising at least substantially vertically hinge pins and for driving the rotary harrow two swivable portions are disposed substantially midway the said beams, the said swivable portions being interconnected by means of a telescopic shaft, and being part of transmission gear boxes, each transmission gear box comprising a bevel gear wheel, one transmission gear box being disposed at the side facing the rotary harrow and the other transmission gear box being disposed on the frame portion to be coupled to the tractor. By means of this arrangement, the supporting of the combination is reliable in every chosen position of same, whereby in each position the drive for the rotary harrow is disposed in such a way that no excessive forces are exerted on this drive.

The French patent 1 257 784 discloses a soil tilling implement constituted by a rotary cultivator and connected to the rear of a tractor by means of a parallelogram construction in such a way that the cultivator can be disposed in a position directly to the rear of the tractor and aside same. The drive for the cultivator is disposed underneath the parallelogram structure, the arrangement being such that in the various positions reaction forces can be exerted on this drive in an unfavourable way.

Embodiments of the invention will now be described in greater detail by way of example with reference to the accompanying drawings.

Figure 1 is a plan view of a combination of a tractor having at its front side an agricultural machine according to the invention, and a plough at its rear.

Figure 2 shows on an enlarged scale, the agricultural machine according to the invention and how it is coupled to the front of the tractor.

Figure 3 is a view taken in the direction of the arrow III in Figure 2, whereas

Figure 4 is a view taken in the direction of the arrow IV in Figure 2.

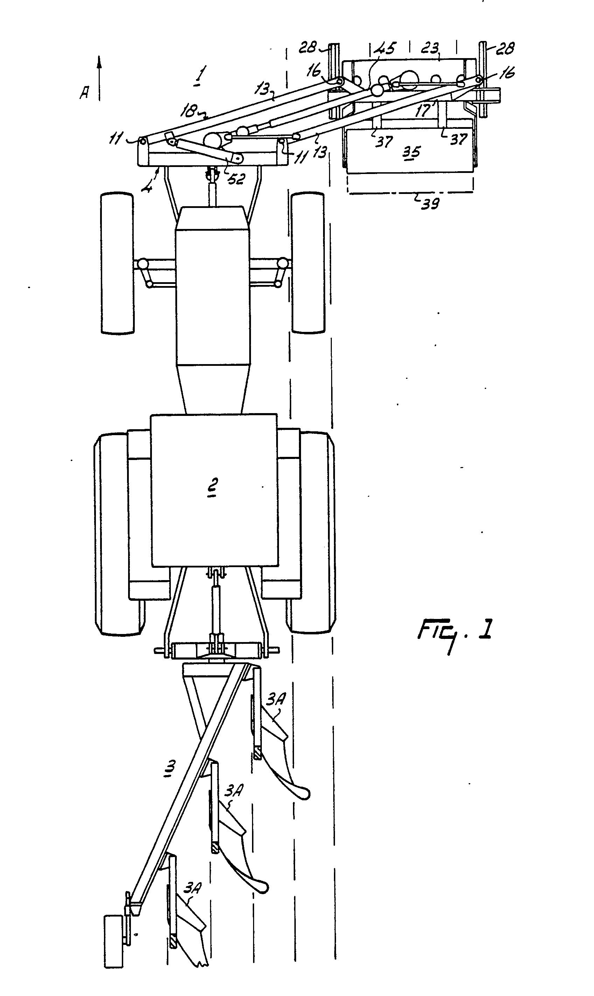

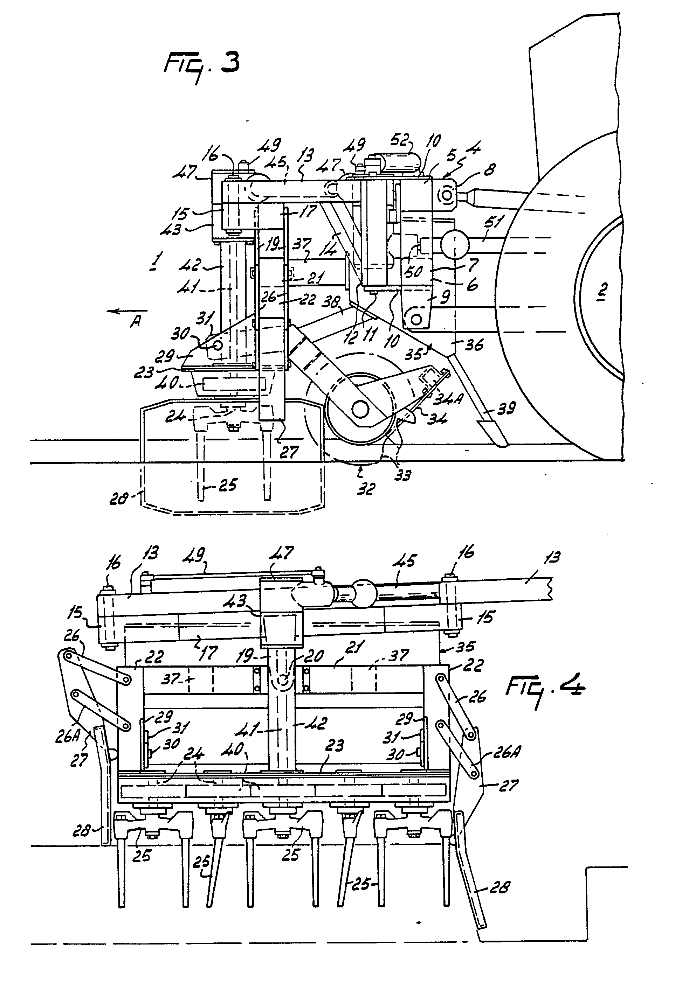

The agricultural machine 1 shown in the Figures 1—4 is more specifically intended for coupling to the front of a tractor 2 in order to be used in combination with an agricultural machine 3 provided at the rear of the tractor, a plough in this example, which in this embodiment is a reversible plough hitched to the three-point lifting device at the rear of the tractor.

The agricultural machine 1 at the front of the tractor comprises a frame portion 4 which includes two horizontal transverse beams 5 and 6 located one above the other and extending at least substantially in parallel with each other. The ends of the transverse beams 5 and 6 are interconnected by means of beams 7 extending in the upward direction. At the front of the frame portion 4, the upper frame beam 5 is provided midway with a pair of lugs 8, whereas the lower frame beam 6 has at its bottom side two pairs of lugs 9 remote from the beam centre. The respective pairs of lugs 8 and 9 constitute a three-point linkage for coupling the machine to the three-point lifting device of a tractor.

At its front, the frame portion is provided in the region of the upper and lower sides, respectively of the upper and lower frame beams 5 and 6, respectively with a rearwardly extending horizontal lug 10. An upwardly, preferably vertically, extending shaft 11 is arranged between the lugs 10 of each pair. A bushing 12 is disposed around the shaft 11 between the lugs. The upper side of the bushing 12 is connected to a supporting beam 13 which extends in an at least substantially horizontal direction and is connected to the bottom side of the bushing by means of a support 14. The other end of each supporting beam 13 is connected swivably by means of a lug 15 and a shaft 16 to the ends of a beam 17, which extends at least substantially in parallel with the beams 5 and 6. The beams 5 and 17 form together with the supporting beams 13 a parallelogram construction 18, which comprises the vertical shafts 11 and 16; the shafts 16 being located before the beam 17. Near its centre, the beam 17 is provided at its bottom side with a pair of lugs 19 which extend downwardly and are disposed swivably at the lower end around a shaft 20. The shaft 20 is located midway a beam 21 which extends transversely of the direction of operative travel A. At its ends the beam 21 has downwardly extending beams 22 which are disposed near the side edges at the rear of a box-like frame portion 23, which extends at least substantially in parallel with the beam 21. The upwardly, preferably vertically, extending shafts 24 of tilling members 25 are supported in the box-like frame portion 23 at equal distances of, preferably, 25 cms from each other. Each of the tilling members 25 includes an at least substantially horizontal carrier, disposed on the end of a shaft 24 projecting from under the frame portion 23 and provided near the ends with downwardly extending tilling elements.

Swivable arms 26 and 26A which are disposed one above the other are connected to each of the upwardly extending beams 22. By means of their other ends the arms 26 and 26A are connected swivably to a carrier 27. The carrier 27 is fitted to an upwardly extending plate 28. The hinge points of the arms 26 and 26A on the carrier 27 are closer to each other than the hinging points of the arms on the beams 22, in such a way, that the horizontal hinge pins which extend in the direction of operative travel A form a pivotal quadrangle deviating from a parallelogram.

Each of the plates 28 has an at least substantially horizontal bend directly under the connection to the carrier 27, in such a way, that the plate can be in a lowermost position, whereby the portion located above the bend extends at least substantially parallel to the rotary axis of a tilling member 25, or in an uppermost position in which the portion located below the bend, which portion covers two-thirds of the height of the plate, is in a position in which it extends at least substantially parallel to the rotary axis of a tilling member (Figure 4). At some distance from the ends, the frame portion 23 is provided at its upper side with plates 29 which extend in the direction of operative travel A and are fitted at the rear against the interior side of the beams 22. By means of a shaft 30 rearwardly extending arms 31 are fitted swivably to the plates 29. An adjusting device, not further shown, is located near the rear of the box-like frame portion 23 for each of the arms 31, with the aid of which the arms are adjustable to and lockable in a plurality of positions. A roller 32 which in this embodiment is constituted by a packer roller is provided freely rotatably between the free ends of the arms 31. The packer roller 32 includes scrapers 34 located between tined rings 33 and are disposed on a transverse carrier 34A located behind the roller. The box-like frame portion 23 with the tilling members 24 forms part of a rotary harrow, which is associated with a machine 35 for putting seed material on or in the soil. The machine 35 includes a container 36 located behind the frame portion 23 and above the roller 32. By means of two at least substantially horizontally extending supports 37 and two downwardly and forwardly extending supports 38 the container 36 is connected to the beam 21 and to the frame portion 23, respectively.

At its bottom side the container 36 is provided with pipes 39 which are located behind the roller and extend to at least the tilled soil.

The container 36 incorporates a seed sowing mechanism which in a manner not further shown can be driven during operation for placing material, such as seed material, on or in the soiled earth via the pipes 39. In the box-like frame portion 23, each one of the shafts 24 of a tilling member 25 carries a straight-toothed gear wheel 40, in such a way, that the gear wheels of adjacent tilling members are in mesh with each other. Near the centre the shaft 24 of a tilling member 25 is extended in the upward direction. The extension 41 is supported by a tube 42. The tube 42, which is connected to the frame portion 23 has a gear box 43 at its upper side. The gear box 43 has an upper portion which is capable of swivelling around a shaft which coincides with the longitudinal centre line of the extension 41.

Inside the upper portion of the gear box 43 the extension 41 is in driving connection via a conical gear wheel transmission with a shaft 44, which extends in an at least substantially horizontal direction and at least substantially parallel to the supporting beams 13. By means of a telescopic shaft 45, which shaft includes universal couplings, the shaft 44 is connected to a shaft 46 which extends in an at least substantially horizontal direction. Inside a swivable upper portion of a gear box 47 the shaft 46 is in connection via a conical gear wheel transmission with a downwardly extending shaft 48. The upper portion of the gear box 47 is swivable around a shaft which coincides with the longitudinal centre line of the shaft 48.

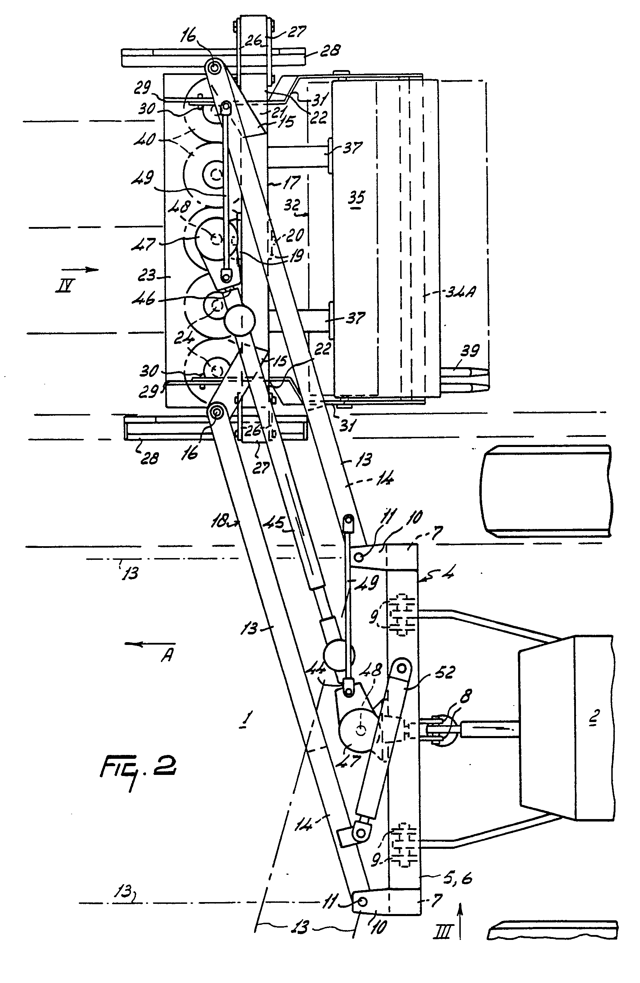

The shafts 11 and 16 of the parallelogram construction 18 are in-line with the extension 41 and the shaft 48, respectively, these lines being in parallel (Figure 2).

Each of the swivable upper portions of the gear boxes 43 and 47 is swivably connected to a supporting arm 13 by means of an arm 49, in such a way, that also here a parallelogram is formed.

At the bottom side of the gear box 47 the shaft 48 is in driving connection, via a conical gear wheel transmission with a rearwardly extending shaft 50, whose front end projects from the gear box and is connectable to a power take-off shaft at the front of the tractor, via an intermediate shaft 51. An adjusting cyinder 52 is provided between the upper side of the frame beam 5 and, as seen in the direction of operative travel A, the left-hand supporting arm 13, which cylinder can be connected to the hydraulic circuit of the tractor by means of ducts, not shown.

The above-described combination comprising the tractor 2, the reversible plough 3 coupled to the rear of the tractor and the agricultural machine 1 provided at the front of the tractor and being in the form of a seed drill, operates as follows.

During ploughing, the plough 3 including the plough bodies 3A, assumes a position as shown in Figure 1, contiguous strips of soil then being tilled. During its forward travel in a direction indicated by arrow A, the agricultural implement 1 whose frame includes coupling means formed at the rear by the frame portion 4 and the lugs 8 and 9 and which, as mentioned already in the foregoing, is in the form of a seed drill, assumes a position as shown in the Figures 1 and 2. Then the strips of soil already tilled by the plough 3 and located beside the tractor are crumbled with the aid of the tilling members 25 and thereafter the strip is sown with material, for example seed material, fed from the container 36, via the pipes 39. Seen in the direction of operative travel A, the left-hand plate 28 then assumes a position, as shown in Figure 4, so that the plate moves along the upright wall of a furrow and, in cooperation with the outermost tilling member 25, provides crumbling and distribution of the earth, without this earth being moved into the furrow. The other plate 28 assumes a position as also shown in Figure 4. In this position the bottom portion of the plate 28 cooperates with an outermost tilling member 25 for crumbling and distributing the earth and at the same time ensures an appropriate joining with previously tilled soil. Since the whole assembly is freely rotatable around the swivel pin formed by the horizontal shaft 20, which extends in the direction of operative travel A, a good adaptation can be obtained during operation. The presence of the shafts 16 in front of the beam 17 increases the stability.

At the end of the field the agricultural machine 1 can be lifted up with the aid of the three-point lifting device of the tractor, and, after the tractor has reversed, the reversible plough can be brought into its other working position. Thereafter, with the aid of the adjusting cylinder 52, the parallelogram construction 18 of the frame of the machine 1 can be adjusted to a position as shown by solid lines, it then being possible that the machine 1 tills and sows the strip ploughed last. The last strip of soil of a field can, after this strip has been ploughed, and after the plough has been lifted, be tilled with the aid of the agricultural machine 1, if the machine is adjusted to a position in which it is midway in front of the tractor. In the lifted condition, the agricultural machine can be transported in this position. Since the frame of the machine 1 has at its rear coupling points for coupling to the tractor, the whole assembly can be pushed, a good view of its operation then being obtained.

## Claims

1. An agricultural machine, including a tilling implement (23, 25) disposed in front of a seed drill (35) and comprising a frame having at least one coupling point (8, 9) for coupling to a tractor, which coupling point (8, 9) is located at the rear of the frame, the arrangement being such that the machine can be pushed by the tractor and is adjustable from the tractor to an operating position in front of the tractor and also to an operating position aside the tractor, characterized in that the soil tilling implement is afforded by a rotary harrow (23, 25), and said frame comprises a parallelogram construction (18) having parallel or substantially parallel beams (13) arranged between a tractor linkable frame portion (4) and the rotary harrow (23, 25), the parallelogram construction (18) comprising at least substantially vertical hinge pins (11, 16) and the drive for the rotary harrow (23, 25) comprising two swivable portions, which are disposed substantially midway the said beams (13), the said swivable portions being part of transmission gear boxes (47) which are interconnected by means of a telescopic shaft (45), each transmission gear box (47) comprising bevel gear wheels, one transmission gear box (47) being disposed at the side facing the rotary harrow (23, 25) and the other transmission gear box (47) being disposed on the frame portion (4) to be coupled to the tractor.

2. An agricultural machine as claimed in claim 1, characterized in that each said portion of a transmission gear box (47) is swivably connected to a said beam (13) of the parallelogram construction (18) in such a way, that the hinging connection in itself forms a parallelogram construction.

3. An agricultural machine as claimed in claim 1 or 2, characterized in that an axis (20) extending in the direction of operative travel is provided, around which the machine is freely pivotable during operation.

4. An agricultural machine as claimed in any one of the preceding claims, characterized in that a packer roller (32) is arranged between the rotary harrow (23, 25) and the seed drill (35), the said packer roller (32) supporting the whole assembly during operation.

5. An agricultural machine as claimed in any one of the preceding claims, characterized in that the rotary harrow (23, 25) has side plates (28) which can co-operate with the outermost tilling member (25) of the harrow, and during operation the side plates (28) can assume two different positions for co-operating with an outermost tilling member (25).

6. An agricultural machine as claimed in claim 5, characterized in that in the lowermost position a side plate (28) can move along an upright wall of a furrow.

### Patentansprüche

1. Landwirtschaftliche Maschine, mit einer vor einer Drillmaschine (35) angeordneten Bodenbearbeitungsvorrichtung (23, 25) und einem Rahmen mit mindestens einem Kupplungspunkt (8, 9) zum Ankuppeln an einen Traktor, wobei der Kupplungspunkt (8, 9) auf der Rückseite des Rahmens vorgesehen ist, und die Anordnung (9) derart ist, dass die Maschine von dem Traktor geschoben und vom Traktor aus in eine Arbeitsstellung vor dem Traktor wie in eine Arbeitsstellung seitlich neben dem Traktor eingestellt werden kann, dadurch gekennzeichnet, dass die Bodenbearbeitungsvorrichtung durch eine Kreiselegge (23, 25) gebildet ist, und der Rahmen nach Art eines Parallelogramms (18) gebildet ist mit parallelen oder im Wesentlichen parallelen Auslegern (13), die zwischen einem am Traktor befestigbarem Rahmenteil (4) und der Kreiselegge (23, 25) liegen, und das Parallelogramm (18) wenigstens im Wesentlichen vertikale Gelenkbolzen (11, 16) umfasst, dass der Antrieb für die Kreiselegge (23, 25) zwei schwenkbare Teile aufweist, die im Wesentlichen mittig zwischen den Auslegern (13) liegen und Bauelemente von Zwischengetrieben (47) bilden, welche durch eine Teleskopwelle (45) miteinander verbunden sind, wobei jedes Zwischengetriebe (47) Kegelräder aufweist und ein Zwischengetriebe (47) auf der der Kreiselegge (23, 25) zugewandten Seite und das andere Zwischengetriebe (47) auf dem Rahmenteil (4) zur Ankupplung an den Traktor angeordnet ist.

2. Landwirtschaftliche Maschine nach Anspruch 1, dadurch gekennzeichnet, dass jeder schwenkbare Teil eines Zwischengetriebes (47) schwenkbar an einem der Ausleger (13) des Parallelogramms (18) befestigt ist, derart, dass die Gelenkverbindung selbst ein Parallelogramm bildet.

3. Landwirtschaftliche Maschine nach Anspruch 1 oder 2, dadurch gekennzeichnet, dass eine in Arbeitsrichtung sich erstreckende Achse (20) vorgesehen ist, um die die Maschine im Betrieb frei drehbar ist.

4. Landwirtschaftliche Maschine nach einem der vorhergehenden Ansprüche, dadurch gekennzeichnet, dass zwischen der Kreiselegge (23, 25) und der Drillmaschine (35) eine Verdichtungswalze (32) angeordnet ist, welche die gesamte Einheit während des Betriebs trägt.

5. Landwirtschaftliche Maschine nach einem der vorhergehenden Ansprüche, dadurch gekennzeichnet, dass die Kreiselegge (23, 25) Seitenplatten (28) aufweist, welche mit den äussersten Bearbeitungswerkzeugen (25) der Kreiselegge zusammenwirken und die Seitenplatten (28) während des Betriebs zwei unterschiedliche Stellungen für das Zusammenwirken mit einem äussersten Bearbeitungswerkzeug (25) einnehmen können.

6. Landwirtschaftliche Maschine nach Anspruch 5, dadurch gekennzeichnet, dass in der untersten Stellung eine Seitenplatte (28) entlang einer aufrechten Wand einer Furche bewegbar ist.

**Revendications**

1. Machine agricole comprenant un dispositif de labourage (23, 25) disposé en avant d'un semoir (35) et comportant un chassis ayant au moins un point d'attelage (8, 9) pour attelage à un tracteur, lequel point d'attelage (8, 9) est situé à l'arrière du chassis, l'arrangement étant tel que la machine puisse être poussée par le tracteur et soit réglable à partir du tracteur en une position de travail en avant du tracteur et aussi en une position de travail latéralement au tracteur, caractérisée en ce que le dispositif de labourage du sol est constitué par une herse rotative (23, 25) et en ce que ledit chassis comporte une structure en parallélogramme (18) ayant des poutres (13) parallèles ou sensiblement parallèles disposées entre une partie (4) du chassis pouvant être reliée au tracteur et la herse rotative (23, 25), la structure en parallélogramme (18) comprenant des pivots d'articulation (11, 16) au moins sensiblement verticaux, et le dispositif d'entraînement de la herse rotative (23, 25) comprenant deux parties pivotantes disposées sensiblement à mi-distance entre lesdites poutres (13), lesdites parties pivotantes faisant partie de boîtes d'engrenages (47) de transmission qui sont interconnectées au moyen d'un arbre télescopique (45), chaque boîte d'engrenages (47) de transmission comprenant des roues à denture conique, une des boîtes d'engrenages (47) de transmission étant disposée sur le côté faisant face à la herse rotative (23, 25) et l'autre boître d'engrenages (47) de transmission étant disposée sur la partie (4) du chassis destinée à être attelée au tracteur.

2. Machine agricole selon la revendication 1, caractérisée en ce que chacune desdites parties d'une boîte d'engrenages (47) de transmission est reliée de manière pivotante à une desdites poutres (13) de la structure en parallélogramme (18) de telle manière que la liaison articulée forme par elle-même une structure en parallélogramme.

3. Machine agricole selon la revendication 1 ou 2, caractérisée en ce qu'il est prévu un axe (20) s'étendant dans le sens de marche de travail, autour duquel la machine peut pivoter librement au cours du travail.

4. Machine agricole selon l'une quelconque des revendications précédentes, caractérisée en ce qu'un rouleau compacteur (32) est disposé entre la herse rotative (23, 25) et le semoir, ledit rouleau compacteur (32) supportant tout l'ensemble au cours du travail.

5. Machine agricole selon l'une quelconque des revendications précédentes, caractérisée en ce que la herse rotative (23, 25) a des plaques latérales (28) qui peuvent coopérer avec l'organe de labour (25) de la herse situé le plus à l'extérieur, ces plaques latérales (28) pouvant prendre deux positions différentes pendant le travail pour coopérer avec un organe de labour (25) situé le plus à l'extérieur.

6. Machine agricole selon la revendication 5, caractérisée en ce qu'en la position la plus basse une plaque latérale (28) peut se déplacer le long d'une paroi verticale d'un sillon.

FIG. 1

FIG. 2

EP 0 198 563 B1

FIG. 3

FIG. 4

3